# EUROPEAN PATENT APPLICATION

(11) **EP 4 391 123 A2**
(43) Date of publication of application: **26.06.2024**
(21) Application number: 23219511.5
(22) Date of filing: 21.12.2023
(51) Int. Cl.: H01M 8/04029, H01M 8/04186, H01M 8/18

(54) **SYSTEM AND METHOD FOR HEAT ENERGY EXCHANGE WITH ELECTRIC ENERGY STORAGE CAPABILITIES**

(30) Priority: 22.12.2022 US 202263476750 P
(71) Applicant: Carrier Corporation, Palm Beach Gardens, FL 33418 (US)
(72) Inventor: Krutskevych, Nazar, Gdansk, 80-890 (PL); Bemke, Ireneusz, Gdansk, 80-890 (PL)
(74) Representative: Dehns

(57) **Abstract**

Disclosed embodiment of an energy system comprises an electric energy storage subsystem (102) that comprises an electrolyte storage tank (104) containing a first electrolyte and a second electrolyte, and a first electrolyte pump (116a) and a second electrolyte pump (116b). The energy system further comprises a heat energy exchange subsystem (106) comprising one or more heat exchange coils (108) connected to the electrolyte storage tank (104). The first electrolyte pump (116a) and the second electrolyte pump (116b) are respectively configured to drive a fluid movement of the first electrolyte and the second electrolyte between the electrolyte storage tank (104) and the heat exchange subsystem (106) through the one or more heat exchange coils (108). The fluid movement of the first electrolyte and the second electrolyte through the one or more heat exchange coils (108) causes a first heat exchange between the first electrolyte and the second electrolyte respectively and a first heat exchange medium comprised in the heat energy exchange subsystem (106).

## Description

### CROSS-REFERENCE TO RELATED APPLICATION

This patent application claims the benefit of US Provisional Patent Application No. 63/476,750, filed on Dec 22, 2022, which is incorporated by reference herein in its entirety.

### BACKGROUND

This invention relates to the field of energy systems, heat or thermal energy exchange systems, and more particularly, to a system and method for heat or thermal energy exchange with electric energy storage capabilities.

With the ever increasing demand for electric energy, energy generation, temperature regulation and storing capabilities of a building have been an area of concern in the last decade. Typical solutions include physically independent systems, each dedicated to meeting the energy requirements of the building. Independent systems such as battery storage and heat pump require dedicated space. This leads to an overall increase in technical (non-commercial) area in the building which may be undesirable in certain scenarios.

Heat exchange systems are known to be used for regulating temperatures inside buildings and large enclosed areas. Such systems involve underground cooling/heating of a heat exchange medium, such as air, that is pumped into an underground passage or region with a temperature difference with respect to the surface temperature. Such systems are energy efficient and provide appreciable regulation of temperatures during summers and winters. Alternatively, temperature regulation may be achieved by air conditioning systems that consume a lot of power and may not be the best utilization of renewable resources.

Electric power requirements of these buildings are typically met by power supply from the power grids and one or more secondary power sources. Such secondary power sources may include solar panels, generators, batteries, etc. The secondary power sources are either inadequate in terms of the back-up provided for a given load or are not always cost efficient. Yet another disadvantage of deploying secondary power sources such as a Powerwall (implementing Li-ion batteries) is the fire hazard and the associated infrastructures that has a one-time installation cost and recurring maintenance costs. In addition, the life of a typical Li-ion battery may be about 4-5 years depending on the frequency of charging/recharging cycles. Furthermore, any additional or new installation for a secondary power source would require adequate installation space which is a significant investment of resources. In certain scenarios, the real estate required for such installation may not be available, especially in crowded areas with dense constructions.

Therefore, there is a well-felt need for a multi-purpose energy system that can meet the above-mentioned energy requirements of the building.

### SUMMARY

Viewed from one aspect there is provided an energy system, comprising an electric energy storage subsystem that comprises an electrolyte storage tank containing a first electrolyte and a second electrolyte, and a first electrolyte pump and a second electrolyte pump. The energy system further comprises a heat energy exchange subsystem comprising one or more heat exchange coils connected to the electrolyte storage tank. The first electrolyte pump and the second electrolyte pump are respectively configured to drive a fluid movement of the first electrolyte and the second electrolyte between the electrolyte storage tank and the heat exchange subsystem through the one or more heat exchange coils. The fluid movement of the first electrolyte and the second electrolyte through the one or more heat exchange coils causes a first heat exchange between the first electrolyte and the second electrolyte respectively and a first heat exchange medium comprised in the heat energy exchange subsystem.

In one or more embodiments, the electric energy storage subsystem further comprises one or more electrochemical cells disposed in the electrolyte storage tank. In one or more embodiments, each of the one or more electrochemical cells comprises an anode and a cathode. In one or more embodiments, the first electrolyte corresponds to an anolyte and the second electrolyte corresponds to a catholyte. In one or more embodiments, the electrolyte storage tank comprises a first portion and a second portion separated by a membrane therebetween. The first electrolyte and the anode are disposed in the first portion. The second electrolyte and the cathode are disposed in the second portion.

In one or more embodiments, the energy system further comprises a heat pump subsystem connected to the electric energy storage subsystem and configured to circulate a second heat exchange medium to cause a second heat exchange between the first electrolyte and the second electrolyte respectively and the second heat exchange medium. In one or more embodiments, the energy system further comprises a heating and cooling subsystem connected to the heat pump subsystem and configured to circulate the second heat exchange medium received from the heat pump subsystem to regulate a temperature inside a building.

In one or more embodiments, the first heat exchange medium and the second heat exchange medium corresponds to air. In one or more embodiments, the energy system further comprises an electric power subsystem connected with the electric energy storage subsystem and configured to receive electric energy from one or more electrochemical cells comprised in the electric energy storage subsystem. In one or more embodiments, the one or more electrochemical cells correspond to one or more flow battery reactors.

In one or more embodiments, the first electrolyte comprises methyl viologen and wherein the second electrolyte comprises 4-hydroxy-2,2,6,6-tetramethylpiperidin-1-oxyl
In one or more embodiments, in a first mode of operation, the first heat exchange corresponds to a transfer of thermal energy from the first electrolyte and the second electrolyte to the first heat exchange medium. In one or more embodiments, wherein, in a second mode of operation, the first heat exchange corresponds to a transfer of thermal energy from the first heat exchange medium to the first electrolyte and the second electrolyte respectively. In one or more embodiments, in the first mode of operation, the second heat exchange corresponds to a transfer of thermal energy from the second heat exchange medium and the first electrolyte and the second electrolyte respectively. In one or more embodiments, in the second mode of operation, the second heat exchange corresponds to a transfer of thermal energy from the first electrolyte and the second electrolyte respectively to the second heat exchange medium.

Viewed from another aspect a method of heat exchange is provided. In an embodiment, the method comprises providing an electric energy storage subsystem that comprises an electrolyte storage tank containing a first electrolyte and a second electrolyte and providing a heat energy exchange subsystem comprising one or more heat exchange coils connected to the electrolyte storage tank. The method further comprises providing a first electrolyte pump and a second electrolyte pump in the electrolyte storage tank to drive a fluid movement of the first electrolyte and the second electrolyte between the electrolyte storage tank and the heat exchange subsystem through the one or more heat exchange coils. The fluid movement of the first electrolyte and the second electrolyte through the one or more heat exchange coils causes a first heat exchange between the first electrolyte and the second electrolyte respectively and a first heat exchange medium comprised in the heat energy exchange subsystem.

In one or more embodiments, the method further comprises providing one or more electrochemical cells in the electrolyte storage tank. In one or more embodiments, the first electrolyte corresponds to an anolyte and the second electrolyte corresponds to a catholyte. In one or more embodiments, the method further comprises dividing the electrolyte storage tank into a first portion and a second portion separated by a membrane therebetween and providing the first electrolyte and an anode in the first portion and the second electrolyte and a cathode in the second portion respectively.

In one or more embodiments, the method further comprises connecting a heat pump subsystem to the electric energy storage subsystem and circulating a second heat exchange medium to cause a second heat exchange between the first electrolyte and the second electrolyte respectively and the second heat exchange medium. In one or more embodiments, the method further comprises connecting a heating and cooling subsystem to the heat pump subsystem and circulating the second heat exchange medium received from the heat pump subsystem to regulate a temperature inside a building. In one or more embodiments, the method further comprises connecting an electric power subsystem to the electric energy storage subsystem and configuring the electric power subsystem to receive electric energy from one or more electrochemical cells comprised in the electric energy storage subsystem.

In one or more embodiments, the one or more electrochemical cells correspond to one or more flow battery reactors. In one or more embodiments, the first electrolyte comprises methyl viologen and wherein the second electrolyte comprises 4-hydroxy-2,2,6,6-tetramethylpiperidin-1-oxyl. In one or more embodiments, the method further comprises operating in a first mode, wherein the first heat exchange corresponds to a transfer of thermal energy from the first electrolyte and the second electrolyte to the first heat exchange medium. In one or more embodiments, the method further comprises operating in a second mode, wherein the first heat exchange corresponds to a transfer of thermal energy from the first heat exchange medium to the first electrolyte and the second electrolyte respectively. In one or more embodiments, in the first mode of operation, the second heat exchange corresponds to a transfer of thermal energy from the second heat exchange medium and the first electrolyte and the second electrolyte respectively. In one or more embodiments, in the second mode of operation, the second heat exchange corresponds to a transfer of thermal energy from the first electrolyte and the second electrolyte respectively to the second heat exchange medium.

Viewed from another aspect a multi-purpose heat exchange system is provided. In an embodiment, the multi-system multi-purpose heat exchange system comprises an electrolyte storage tank that further comprises an anolyte in a first portion and a catholyte in a second portion. The electrolyte storage tank further comprises one or more flow batteries disposed in the electrolyte storage tank, wherein each of the one or more flow batteries comprises an anode disposed in the first portion and a cathode disposed in the second portion. The electrolyte storage tank further comprises a first electrolyte pump and a second electrolyte pump. The multi-purpose heat exchange system further comprises a heat energy exchange subsystem comprising one or more heat exchange coils connected to the electrolyte storage tank. The first electrolyte pump and the second electrolyte pump are respectively configured to drive a fluid movement of the anolyte and the catholyte between the electrolyte storage tank and the heat exchange subsystem through the one or more heat exchange coils. The fluid movement of the anolyte and the catholyte through the one or more heat exchange coils causes a first heat exchange between the anolyte and the catholyte respectively and a first heat exchange medium comprised in the heat energy exchange subsystem.

The foregoing summary is illustrative only and is not intended to be in any way limiting. In addition to the illustrative aspects, embodiments, and features described above, further aspects, embodiments, features, and techniques of the invention will become more apparent from the following description taken in conjunction with the drawings.

### BRIEF DESCRIPTION OF THE DRAWINGS

Embodiments of the invention will now be described by way of example only. The accompanying drawings are included to provide a further understanding of the subject disclosure of this invention and are incorporated in and constitute a part of this specification. The drawings illustrate exemplary embodiments of the subject disclosure and, together with the description, serve to explain the principles of the subject disclosure.
FIG. 1 is a block diagram of a multi-purpose energy system.
FIG. 2 is a flow diagram illustrating an exemplary embodiment of a method of heat exchange having electric energy storage capabilities.

### DETAILED DESCRIPTION

The following is a detailed description of embodiments of the disclosure depicted in the accompanying drawings. The embodiments are in such detail as to clearly communicate the disclosure. However, the amount of detail offered is not intended to limit the anticipated variations of embodiments; on the contrary, the intention is to cover all modifications, equivalents, and alternatives falling within the spirit and scope of the subject disclosure as defined by the appended claims.

Various terms are used herein. To the extent a term used in a claim is not defined below, it should be given the broadest definition persons in the pertinent art have given that term as reflected in printed publications and issued patents at the time of filing.

The energy system disclosed herein provides a common working infrastructure for a heat transfer pump (ground coils agents) and electrolytes (e.g., anolyte agents, catholyte agents) of an electrochemical storage to the energy system and uses electrolytes as a heat transfer medium (or fluid) for transferring heat from/to ground coils of heat pump unit. The energy system uses the heat pump ground coil infrastructure as a cooling system for electrochemical storage. The energy system addresses the limitation of required electrolyte storage tank capacity for storing electrolytes by using heat pump piping system as part of storage capacity.

The disclosed embodiments have numerous advantages. For example, the disclosed approach can be applied to extend closed ground loop heat pump units to include electrochemical (power) storing capabilities. Yet another advantage is that there is no need for extra pipes and storing tank infrastructure/elements to store the electrolytes. Disclosed embodiments propose the use of flow batteries instead of Li-ion batteries thereby eliminating the risk of thermal runaway. This also reduces fire safety hazards and eliminates the installation and maintenance cost for fire safety equipment. In addition, disclosed approach provides for a new multi-purpose energy system that has the joint capability of storing electrochemical energy and climate control.

Disclosed herein is a multi-purpose energy system that has combined capabilities of heat energy exchange for climate control and electric energy storage. To this end, the disclosed embodiments propose the use of electrolytes as a heat exchange medium. For example, flow battery can be installed proximate to the heat exchange region in such a manner that the anolytes and the catholytes can be circulated through exchange coils of the heat exchange regions.

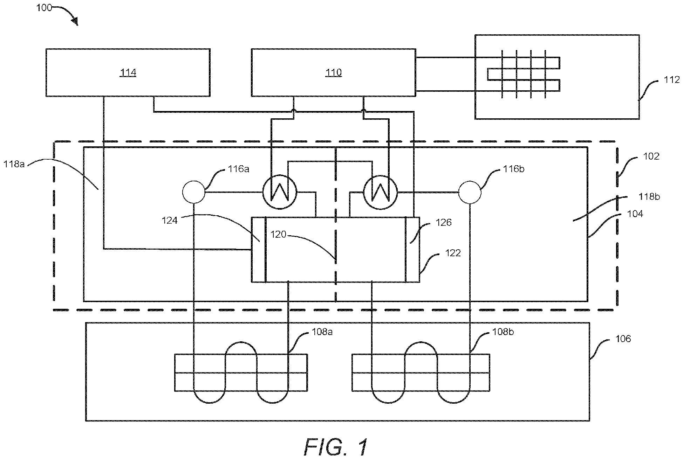

FIG. 1 is a block diagram of a multi-purpose energy system in accordance with one or more embodiments of the invention. Referring to FIG. 1, the multi-purpose energy system 100 includes one or more subsystems, such as, an electric energy storage subsystem 102, a heat energy exchange subsystem 106, a heat pump subsystem 110, a heating and cooling subsystem 112, and an electric power subsystem 114. Each of these subsystems may be independently installed and connected with each other as described herein.

In one or more embodiments, the electric energy storage subsystem 102 includes an electrolyte storage tank 104. The electrolyte storage tank space 104 may be made up of High Density Polyethylene (HDPE) or other material with similar properties and may have a predetermined dimension based on the available space and the energy storage requirement of a given building. It may be noted by those skilled in the art that the amount of electric power stored is proportional to the storage capacity of the electrolyte storage tank 104. In an exemplary embodiment, the electrolyte storage tank 104 contains a first electrolyte and a second electrolyte.

In one or more embodiments, the heat energy exchange subsystem 106 includes one or more heat exchange coils (e.g., a first heat exchange coil 108a, a second heat exchange coil 108b- also referred to hereinafter as "heat exchange coils 108"). The heat exchange coils 108 may have a predetermined length based on the dimensions of the electrolyte storage tank 104 and the heat energy exchange subsystem 106 and may be made of suitable materials that maximize heat transfer between the electrolytes and a first heat exchange medium in the heat energy exchange subsystem.

In an exemplary embodiment, the electrolyte storage tank 104 is installed above the heat energy exchange subsystem 106 in order to allow the electrolytes to flow towards the heat energy exchange subsystem due to gravity. In one or more embodiments, the electrolyte storage tank 104 includes a first electrolyte pump 116a and a second electrolyte pump 116b. The first electrolyte pump 116a and the second electrolyte pump 116b are respectively configured to drive a fluid movement of the first electrolyte and the second electrolyte (respectively) between the electrolyte storage tank 104 and the heat exchange subsystem 106 through the one or more heat exchange coils 108. In an embodiment, the first electrolyte pump 116a and the second electrolyte pump 116b may correspond to centrifugal pumps of appropriate power ratings to drive the requisite amount of electrolyte through the heat exchange coils 108. The installation position of the first electrolyte pump 116a and the second electrolyte pump 116b may be determined based on the storage capacity of the electrolyte and the heat transfer coefficient of the electrolytes.

The fluid movement of the first electrolyte and the second electrolyte through the one or more heat exchange coils 108 causes a first heat exchange between the first electrolyte and the second electrolyte respectively and a first heat exchange medium (e.g., air) in the heat energy exchange subsystem 106. As discussed earlier, the proposed approach utilizes electrolytes having appreciable heat transfer coefficients in the electric energy storage subsystem 102 so that the electrolytes can also act as a heat exchange medium. In one or more embodiments, the first electrolyte and the second electrolyte have a heat transfer coefficient higher than a threshold value. In an embodiment, the threshold value may not be less than that of water based substances.

In one or more embodiments, the electric energy storage subsystem 102 further comprises one or more electrochemical cells (e.g., 122) disposed in the electrolyte storage tank 104. In one or more embodiments, the one or more electrochemical cells correspond to one or more flow battery reactors. In one or more embodiments, each of the one or more electrochemical cells 122 comprises an anode 124 and a cathode 126. In one or more embodiments, the first electrolyte corresponds to an anolyte and the second electrolyte corresponds to a catholyte. In one or more embodiments, the first electrolyte comprises methyl viologen and the second electrolyte comprises 4-hydroxy-2,2,6,6-tetramethylpiperidin-1-oxyl.

In one or more embodiments, the electrolyte storage tank 104 comprises a first portion 118a and a second portion 118b separated by a membrane 120 therebetween. In one or more embodiments, the membrane 120 corresponds to an ion exchange membrane that also divides the electrolyte storage tank 104 into two equal portions. As shown in Fig. 1, the first electrolyte and the anode 124 are disposed of in the first portion 118a. The second electrolyte and the cathode 126 are disposed of in the second portion 118b.

In one or more embodiments, the heat pump subsystem 110 is connected to the electric energy storage subsystem 102 and is configured to circulate a second heat exchange medium (e.g., air) to cause a second heat exchange between the first electrolyte and the second electrolyte respectively and the second heat exchange medium.

In one or more embodiments, the heating and cooling subsystem 112 connected to the heat pump subsystem 110 and is configured to circulate the second heat exchange medium received from the heat pump subsystem 110 to regulate the temperature inside a building. In one or more embodiments, the first heat exchange medium and the second heat exchange medium correspond to air.

In one or more embodiments, the electric power subsystem 114 is connected to the electric energy storage subsystem 102 and is configured to receive electric energy from one or more electrochemical cells 122 comprised in the electric energy storage subsystem 102. In one or more embodiments, the electric power subsystem 114 may be connected to the main power grid and various other secondary sources of power such as solar panels, etc. The electric power subsystem 114 may be configured for overall power management of the building. In one or more embodiments, various functions such as automatic switching between alternative power sources, charging and discharging of the one or more electrochemical cells (e.g., flow battery reactor or electrochemical cell 122), providing power supply for all electrical components/modules of all the subsystems described herein, may be performed by the electric power subsystem 114. In one or more embodiments, the electric power subsystem 114 may be implemented as an integration of one or more of: electric circuits components, electronic components, integrated circuits, firmware, processors or microcontrollers, memory banks with programmable instructions or codes that may be executable by the processors/microcontrollers, one or more voltage sensors, current sensors, temperature sensors, power measuring devices, etc.

The operation of the multi-purpose energy system is explained with reference to different modes. In one or more embodiments, in a first mode of operation, the first heat exchange (between the first electrolyte and the second electrolyte respectively and the first heat exchange medium) corresponds to a transfer of thermal energy from the first electrolyte and/or the second electrolyte to the first heat exchange medium. In one or more embodiments, in the first mode of operation, the second heat exchange (between the first electrolyte and the second electrolyte respectively and the second heat exchange medium) corresponds to a transfer of thermal energy from the second heat exchange medium and the first electrolyte and the second electrolyte respectively.

For example, during summers, the hot air (i.e., second heat exchange medium) is pumped by the heat pump subsystem 110 from the heating and cooling subsystem 112 towards the two heat exchange points (heat exchangers) inside the electrolyte storage tank 104. At the two heat exchangers, the second heat exchange takes place wherein thermal energy is transferred from the hot air pumped by the heat pump subsystem 110 to the first and the second electrolyte. Consequently, the heat pump subsystem 110 receives cooler air, from the two heat exchangers, which is directed towards the heating and cooling subsystem 112 for regulation of the temperature in the building (i.e., for climate control).

The first electrolyte pump 116a and the second electrolyte pump 116b drive the flow of first and second electrolytes towards the heat energy exchange subsystem 106. The electrolytes having received the transferred thermal energy now pass through the exchange coils 108 where the first heat exchange takes place between the electrolytes and the first heat exchange medium in the heat energy exchange subsystem 106. Consequently, the electrolytes come out cooler from the heat energy exchange subsystem 106 through the exchange coils 108 thereby completing the closed loop.

In one or more embodiments, in a second mode of operation, the first heat exchange (between the first heat exchange medium and the first electrolyte and the second electrolyte respectively) corresponds to a transfer of thermal energy from the first heat exchange medium to the first electrolyte and the second electrolyte respectively. In one or more embodiments, in the second mode of operation, the second heat exchange (between the first electrolyte and the second electrolyte respectively and the second heat exchange medium) corresponds to a transfer of thermal energy from the first electrolyte and the second electrolyte respectively to the second heat exchange medium.

For example, during winters, the cool air (i.e., second heat exchange medium) is pumped by the heat pump subsystem 110 from the heating and cooling subsystem 112 towards the two heat exchange points (heat exchangers) inside the electrolyte storage tank 104. At the two heat exchangers, the second heat exchange takes place wherein thermal energy is transferred from the cool air (pumped by the heat pump subsystem 110) to the first and the second electrolyte. Consequently, the heat pump subsystem 110 receives warm air, from the two heat exchangers, which is directed towards the heating and cooling subsystem 112 for regulation of the temperature in the building (i.e., for climate control).

The first electrolyte pump 116a and the second electrolyte pump 116b drive the flow of first and second electrolytes towards the heat energy exchange subsystem 106. The electrolytes having transferred the thermal energy (to the second heat exchange medium) now pass through the exchange coils 108 where the first heat exchange takes place between the electrolytes and the first heat exchange medium in the heat energy exchange subsystem 106. Consequently, the electrolytes come out warmer from the heat energy exchange subsystem 106 through the exchange coils 108 thereby completing the closed loop.

It may be appreciated that the first and second heat exchange takes place, the electrochemical cell stores electrical energy while the electrolytes are circulated for heat transfer.

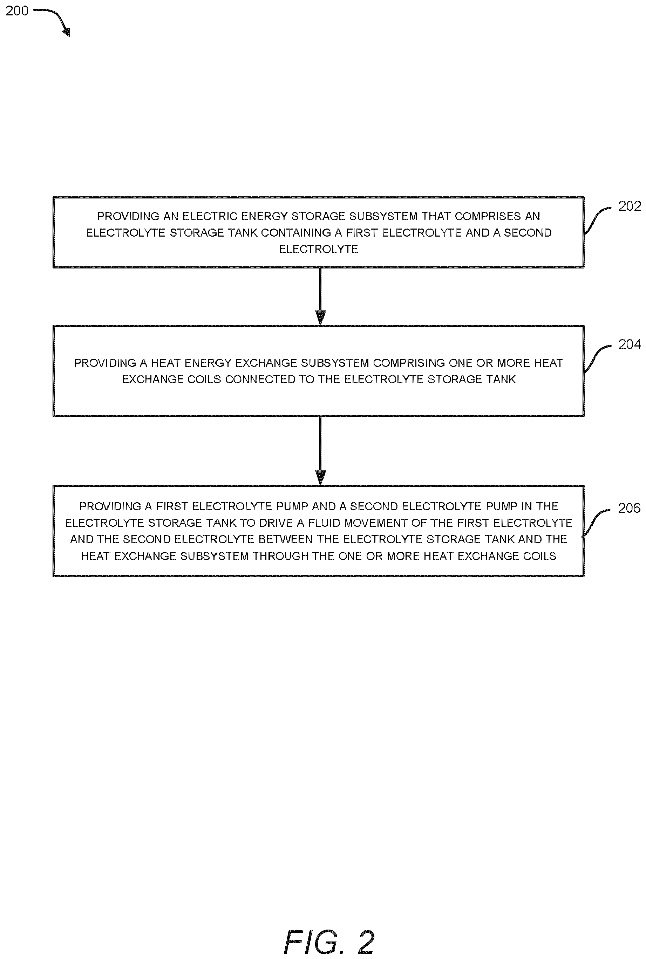

FIG. 2 is a flow diagram illustrating an exemplary embodiment of a method of heat exchange having electric energy storage capabilities, in accordance with one or more embodiments of the invention. Referring to FIG. 2, the method of heat exchange 200 includes the step 202 of providing an electric energy storage subsystem 102 that comprises an electrolyte storage tank 104 containing a first electrolyte and a second electrolyte. The method further includes the step 204 of providing a heat energy exchange subsystem 106 comprising one or more heat exchange coils 108 connected to the electrolyte storage tank 104. The method further includes the step 206 of providing the first electrolyte pump 116a and the second electrolyte pump 116b in the electrolyte storage tank 104 to drive a fluid movement of the first electrolyte and the second electrolyte between the electrolyte storage tank 104 and the heat exchange subsystem 106 through the one or more heat exchange coils 108.

The fluid movement of the first electrolyte and the second electrolyte through the one or more heat exchange coils 108 causes a first heat exchange between the first electrolyte and the second electrolyte respectively and a first heat exchange medium (e.g., air) comprised in the heat energy exchange subsystem 106.

In one or more embodiments, the method 200 further includes the step of providing one or more electrochemical cells 122 in the electrolyte storage tank 104. In one or more embodiments, the first electrolyte corresponds to an anolyte and the second electrolyte corresponds to a catholyte. In one or more embodiments, the method 200 further includes the step of dividing the electrolyte storage tank into the first portion 118a and the second portion 118b separated by the membrane 120 therebetween. The method 200 further includes the step of providing the first electrolyte and an anode (e.g., 124) in the first portion 118a and the second electrolyte and a cathode (e.g., 126) in the second portion 118b respectively.

In one or more embodiments, the method 200 further includes the step of connecting (e.g., via the two heat exchangers) the heat pump subsystem 110 to the electric energy storage subsystem 102 and the step of circulating a second heat exchange medium (e.g., air) to cause a second heat exchange between the first electrolyte and the second electrolyte respectively and the second heat exchange medium. In one or more embodiments, the method 200 further includes the step of connecting a heating and cooling subsystem 112 to the heat pump subsystem 110 and circulating the second heat exchange medium received from the heat pump subsystem 110 to regulate a temperature inside a building. In one or more embodiments, the method 200 further includes the step of connecting an electric power subsystem 114 to the electric energy storage subsystem 102 and configuring the electric power subsystem 114 to receive electric energy from one or more electrochemical cells (e.g., 122) comprised in the electric energy storage subsystem 102.

In one or more embodiments, the one or more electrochemical cells correspond to one or more flow battery reactors. In one or more embodiments, the first electrolyte comprises methyl viologen and wherein the second electrolyte comprises 4-hydroxy-2,2,6,6-tetramethylpiperidin-1-oxylIn one or more embodiments, the method 200 further includes, operating in a first mode, wherein the first heat exchange corresponds to a transfer of thermal energy from the first electrolyte and the second electrolyte to the first heat exchange medium. In one or more embodiments, the method 200 further includes, operating in a second mode, wherein the first heat exchange corresponds to a transfer of thermal energy from the first heat exchange medium to the first electrolyte and the second electrolyte respectively.

In one or more embodiments, in the first mode of operation, the second heat exchange corresponds to a transfer of thermal energy from the second heat exchange medium and the first electrolyte and the second electrolyte respectively. In one or more embodiments, in the second mode of operation, the second heat exchange corresponds to a transfer of thermal energy from the first electrolyte and the second electrolyte respectively to the second heat exchange medium.

Embodiments of a multi-purpose heat exchange system 100 are disclosed. In an embodiment, the multi-system multi-purpose heat exchange system 100 includes an electrolyte storage tank 104 that further includes an anolyte in a first portion 118a and a catholyte in a second portion 118b. The electrolyte storage tank 104 further comprises one or more flow batteries 122 disposed in the electrolyte storage tank 104. Each of the one or more flow batteries 122 includes an anode 124 disposed in the first portion 118a and a cathode 126 disposed in the second portion 118b. The electrolyte storage tank 104 further includes a first electrolyte pump 116a and a second electrolyte pump 116b. The multi-purpose heat exchange system further includes a heat energy exchange subsystem 106 that includes one or more heat exchange coils 108 connected to the electrolyte storage tank 102. The first electrolyte pump 116a and the second electrolyte pump 116b are respectively configured to drive a fluid movement of the anolyte and the catholyte between the electrolyte storage tank 104 and the heat exchange subsystem 106 through the one or more heat exchange coils 108. The fluid movement of the anolyte and the catholyte through the one or more heat exchange coils causes a first heat exchange between the anolyte and the catholyte respectively and a first heat exchange medium comprised in the heat energy exchange subsystem 106.

While the invention has been described with reference to exemplary embodiments, it will be understood by those skilled in the art that various changes may be made, and equivalents may be substituted for elements thereof without departing from the scope of the invention as defined by the appended claims.

In interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced.

## Claims

1. An energy system comprising:
an electric energy storage subsystem (102) comprising:
an electrolyte storage tank (104) containing a first electrolyte and a second electrolyte, and
a first electrolyte pump (116a) and a second electrolyte pump (116b); and
a heat energy exchange subsystem (106) comprising one or more heat exchange coils (108) connected to the electrolyte storage tank (104),
wherein the first electrolyte pump (116a) and the second electrolyte pump (116b) are respectively configured to drive a fluid movement of the first electrolyte and the second electrolyte between the electrolyte storage tank (104) and the heat exchange subsystem (106) through the one or more heat exchange coils (108), and
wherein the fluid movement of the first electrolyte and the second electrolyte through the one or more heat exchange coils (108) causes a first heat exchange between the first electrolyte and the second electrolyte respectively and a first heat exchange medium comprised in the heat energy exchange subsystem (106).

2. The energy system of claim 1, wherein the electric energy storage subsystem (102) further comprises one or more electrochemical cells (122) disposed in the electrolyte storage tank (104).

3. The energy system of claim 2, wherein each of the one or more electrochemical cells (122) comprises an anode and a cathode.

4. The energy system of claim 3, wherein the first electrolyte corresponds to an anolyte and the second electrolyte corresponds to a catholyte; and/or
wherein the electrolyte storage tank (104) comprises a first portion (118a) and a second portion (118b) separated by a membrane (120) therebetween, wherein the first electrolyte and the anode (124) are disposed in the first portion and the second electrolyte and the cathode (126) are disposed in the second portion respectively.

5. The energy system of any preceding claim further comprising a heat pump subsystem (110) connected to the electric energy storage subsystem (102) and configured to circulate a second heat exchange medium to cause a second heat exchange between the first electrolyte and the second electrolyte respectively and the second heat exchange medium;
optionally the energy system further comprising a heating and cooling subsystem (112) connected to the heat pump subsystem (110) and configured to circulate the second heat exchange medium received from the heat pump subsystem (110) to regulate a temperature inside a building.

6. The energy system of claim 5, wherein the first heat exchange medium and the second heat exchange medium corresponds to air or liquid.

7. The energy system of any preceding claim further comprising an electric power subsystem (114) connected with the electric energy storage subsystem (102) and configured to receive electric energy from one or more electrochemical cells (122) comprised in the electric energy storage subsystem.

8. The energy system of claim 2, wherein the one or more electrochemical cells (122) correspond to one or more flow battery reactors.

9. The energy system of any preceding claim, wherein the first electrolyte comprises methyl viologen and wherein the second electrolyte comprises 4-hydroxy-2,2,6,6-tetramethylpiperidin-1 -oxyl.

10. The energy system of claim 5, wherein, in a first mode of operation, the first heat exchange corresponds to a transfer of thermal energy from the first electrolyte and the second electrolyte to the first heat exchange medium; and/or
wherein, in the first mode of operation, the second heat exchange corresponds to a transfer of thermal energy from the second heat exchange medium and the first electrolyte and the second electrolyte respectively.

11. The energy system of claim 5, wherein, in a second mode of operation, the first heat exchange corresponds to a transfer of thermal energy from the first heat exchange medium to the first electrolyte and the second electrolyte respectively; and/or
wherein, in the second mode of operation, the second heat exchange corresponds to a transfer of thermal energy from the first electrolyte and the second electrolyte respectively to the second heat exchange medium.

12. A method of heat exchange, the method comprising:
providing an electric energy storage subsystem (102) that comprises an electrolyte storage tank (104) containing a first electrolyte and a second electrolyte;
providing a heat energy exchange subsystem (106) comprising one or more heat exchange coils (108) connected to the electrolyte storage tank (104); and
providing a first electrolyte pump (116a) and a second electrolyte pump (116b) in the electrolyte storage tank (104) to drive a fluid movement of the first electrolyte and the second electrolyte between the electrolyte storage tank (104) and the heat exchange subsystem (106) through the one or more heat exchange coils (108),
wherein the fluid movement of the first electrolyte and the second electrolyte through the one or more heat exchange coils (108) causes a first heat exchange between the first electrolyte and the second electrolyte respectively and a first heat exchange medium comprised in the heat energy exchange subsystem (106).

13. The method of claim 12 further comprising providing one or more electrochemical cells (122) in the electrolyte storage tank (104), wherein the first electrolyte corresponds to an anolyte and the second electrolyte corresponds to a catholyte;
optionally the method further comprising:
dividing the electrolyte storage tank (104) into a first portion (118a) and a second portion (118b) separated by a membrane (120) therebetween;
providing the first electrolyte and an anode (124) of one of the electrochemical cells (122) in the first portion; and
providing the second electrolyte and a cathode (126) of one of the electrochemical cells in the second portion respectively.

14. The method of claim 12 or 13 further comprising:
connecting a heat pump subsystem (110) to the electric energy storage subsystem (102); and
circulating a second heat exchange medium to cause a second heat exchange between the first electrolyte and the second electrolyte respectively and the second heat exchange medium.

15. A multi-purpose heat exchange system comprising:
an electrolyte storage tank (104) comprising:
an anolyte in a first portion (118a) and a catholyte in a second portion (118b), wherein the electrolyte storage tank (104) further comprises one or more flow batteries (122) disposed in the electrolyte storage tank, wherein each of the one or more flow batteries comprises an anode (124) disposed in the first portion and a cathode (126) disposed in the second portion, and
a first electrolyte pump (116a) and a second electrolyte pump (116b); and
a heat energy exchange subsystem (106) comprising one or more heat exchange coils (108) connected to the electrolyte storage tank (104),
wherein the first electrolyte pump (116a) and the second electrolyte pump (116b) are respectively configured to drive a fluid movement of the anolyte and the catholyte between the electrolyte storage tank (104) and the heat exchange subsystem (106) through the one or more heat exchange coils (108),
wherein the fluid movement of the anolyte and the catholyte through the one or more heat exchange coils (108) causes a first heat exchange between the anolyte and the catholyte respectively and a first heat exchange medium comprised in the heat energy exchange subsystem (106).
